# EUROPÄISCHE PATENTSCHRIFT

(11) **EP 2 247 174 B1**
(45) Veröffentlichungstag und Bekanntmachung des Hinweises auf die Patenterteilung: **09.11.2011**
(21) Anmeldenummer: 09712903.5
(22) Anmeldetag: 17.02.2009
(51) Int. Cl.: A01G 23/00, A01G 23/093, B65B 27/10

(54) **VORRICHTUNG ZUM BÜNDELN VON HOLZ**
DEVICE FOR BUNDLING WOOD
DISPOSITIF POUR BOTTELER DU BOIS

(30) Priorität: 24.02.2008 DE 102008010734
(43) Veröffentlichungstag der Anmeldung: 10.11.2010
(73) Patentinhaber: Viessmann Werke GmbH & Co. KG, 35107 Allendorf (DE)
(72) Erfinder: DOEHRER, Karl, 34474 Diemelstadt (DE)
(74) Vertreter: Wolf, Michael
(86) Internationale Anmeldenummer: PCT/DE2009/000207
(87) Internationale Veröffentlichungsnummer: WO 2009/103271

(56) Entgegenhaltungen:
- WO-A-92/14350
- DE-A1- 3 226 060

## Beschreibung

Die Erfindung betrifft eine Vorrichtung zum Bündeln von Holz gemäß dem Oberbegriff des Patentanspruchs 1.

Eine Vorrichtung der eingangs genannten Art wird zum Beispiel von der Firma John Deere unter dem Produktnamen 1490D gebaut und verkauft (siehe auch http://www.deere.com/de_DE/brochures/ forestry/diverse.html). Diese Vorrichtung besteht aus einem Bündelaggregat mit einem Eintrittsquerschnitt, dem ein Zufuhrbereich für das zu bündelnde Holz vorgeschaltet ist.

Wie das Bündelaggregat im Einzelnen funktioniert, ist für die vorliegende Erfindung nicht von Bedeutung. Es wird nur der Vollständigkeit halber erwähnt, dass typischerweise am Eintrittsquerschnitt Walzen vorgesehen sind, die das Holz in das Bündelaggregat hineinziehen. Ferner weist das Bündelaggregat noch ein Schneidelement (zum Beispiel eine Kettensäge) zum Ablängen des Bündels und natürlich auch eine Vorrichtung zum Umwickeln des Bündels mit einer geeigneten Schnürung auf. - Im übrigen wird auf die Dokumentation von John Deere verwiesen.

Bei der Lösung von John Deere besteht der Zufuhrbereich im Prinzip aus einer großen Wanne, in die im wesentlichen von oben mit einem Kran (Greifer) das zu bündelnde (Rest-) Holz zum Einzug durch die erwähnten Walzen (so genannte Stachelwalzen) eingelegt wird.

Eine ganz ähnliche Vorrichtung wird im übrigen auch noch von der Firma Pinox unter der Produktbezeichnung Pinox 330 gebaut und verkauft (siehe auch http://www.pinox.com/deutsch/produkte/energieholzmaschinen/energieholzmaschinen.htm).

Weiterhin ist eine Vorrichtung der eingangs genannten Art sowohl nach der WO 1992/14350 A als auch nach der DE 32 26 060 A1 bekannt. Beide Vorrichtung umfassen ein Bündelaggregat mit einem Eintrittsquerschnitt, dem ein Zufuhrbereich für das zu bündelnde Holz vorgeschaltet ist, wobei der Zufuhrbereich als sich im Querschnitt erweiternder Tunnel mit einer Eintritts- und einer Austrittsöffnung ausgebildet ist, wobei das Holz dem Zufuhrbereich über die Eintrittsöffnung zuführbar und der Eintrittsquerschnitt des Bündelaggregats der Austrittsöffnung nachgeschaltet ist.

Der Erfindung liegt die Aufgabe zugrunde, eine Vorrichtung zum Bündeln von Holz der eingangs genannten Art zu verbessern. Insbesondere soll die Funktionsweise der Vorrichtung zugunsten einer kontinuierlichen Holzzuführung zum Zufuhrbereich erweitert werden.

Diese Aufgabe ist mit einer Vorrichtung der eingangs genannten Art durch die im Kennzeichen des Patentanspruchs 1 aufgeführten Merkmale gelöst.

Nach der Erfindung ist also vorgesehen, dass der Zufuhrbereich als sich im Querschnitt in Richtung Bündelaggregat erweiternder Tunnel ausgebildet ist.

Mit anderen Worten ausgedrückt, wird erfindungsgemäß der bisher übliche, wannenartige Zufuhrbereich durch eine Kanalkonstruktion mit geschlossenen Seitenwänden ersetzt, wobei nur eine Eintritts- und eine Austrittsöffnung am Kanal vorgesehen sind und wobei die Hauptachse des Kanals bzw. des Tunnels im wesentlichen horizontal verläuft, d. h. die Zuführung des Holzes erfolgt erfindungsgemäß nicht mehr von oben, sondern im wesentlichen waagerecht von vorn in die Eintrittsöffnung des Kanals. Die erfindungsgemäße Besonderheit des Kanals besteht dabei darin, dass dieser nicht etwa einen gleichbleibenden oder gar sich verengenden, sondern einen sich ausweitenden Querschnitt aufweist, d. h. die Querschnittsfläche des Tunnels ist an der Eintrittsöffnung kleiner als an der Austrittsöffnung. Diese Maßgabe führt dabei dazu, dass bei kontinuierlicher Abholzung von zum Beispiel dünnen Pappeln die relativ schnell nacheinander der Eintrittsöffnung zugeführten Bäume im Tunnel gewissermaßen gestaucht werden. Dabei veringert sich die relative (bezogen auf die Vorrichtung) Geschwindigkeit des zugeführten Holzes von der Eintritts- zur Austrittsöffnung, was wiederum vorteilhaft ist, da das Bündelaggregat zur Erzeugung von Bündeln eine Vorschubgeschwindigkeit aufweist, die deutlich geringer als zum Beispiel die Fahrgeschwindigkeit eines Fahrzeugs ist, auf dem das Bündelaggregat montiert ist und das weiterhin eine Schneidvorrichtung aufweist, um zum Beispiel dünne Pappeln in einer kontinuierlichen Vorwärtsbewegung abzuschneiden und dem Zufuhrbereich zuzuführen. Der Tunnel bildet somit gewissermaßen einen Stauraum, in dem das Holz auf die Vorschubgeschwindigkeit des Bündelaggregats abgebremst wird.

Andere vorteilhafte Weiterbildungen der erfindungsgemäßen Vorrichtung ergeben sich aus den abhängigen Patentansprüchen.

Der Vollständigkeit halber wir auf die Dokumente DE 10 2004 019 286 A1, DE 690 02 518 T2, DE 600 16 841 T2 und DE 27 59 533 B1 hingewiesen, wobei diese Schriften ausschließlich Vorrichtungen zum Bündeln von Halmgut (also zum Beispiel Heu und Stroh) offenbaren und insofern, wie jeder Fachmann weiß, absolut ungeeignet zum Bündeln von Holz sind. Diese Dokumente sind also als weit abliegender Stand der Technik zu betrachten.

Die erfindungsgemäße Vorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: von oben die auf einem Fahrzeug zur Ernte dünner, stängeliger Holzgewächse angeordnete, erfindungsgemäße Vorrichtung; und
- Figur 2: von der Seite das Fahrzeug gemäß Figur 1 mit der erfindungsgemäßen Vorrichtung.

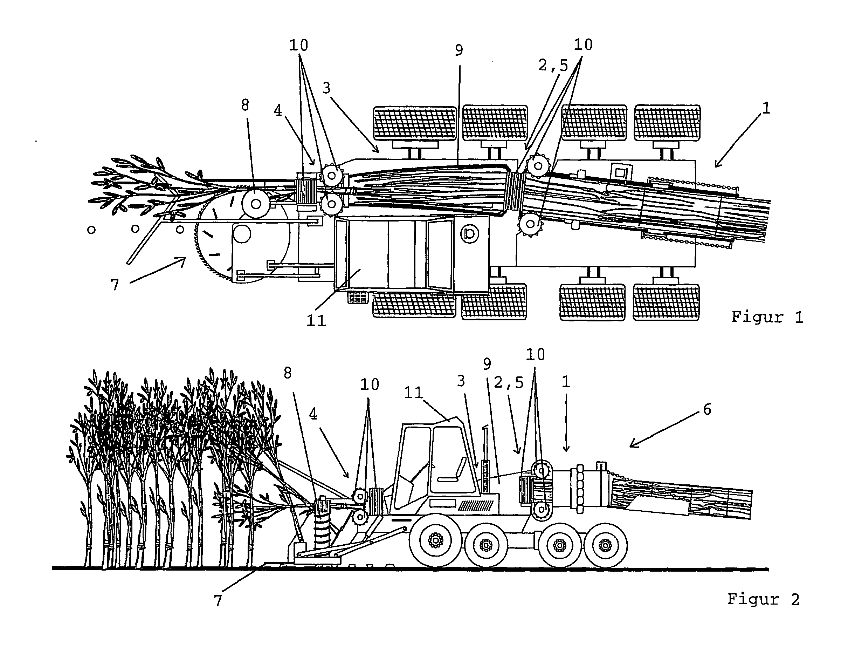

Die in den Figuren 1 und 2 dargestellte, erfindungsgemäße Vorrichtung zum Bündeln von Holz besteht in bekannter Weise zunächst einmal aus einem Bündelaggregat 1 mit einem Eintrittsquerschnitt 2, dem ein Zufuhrbereich 3 für das zu bündelnde Holz vorgeschaltet ist.

Wesentlich für die erfindungsgemäße Vorrichtung ist nun, dass der Zufuhrbereich 3 als sich im Querschnitt in Richtung Bündelaggregat 1 erweiternder Tunnel mit einer Eintritts- 4 und einer Austrittsöffnung 5 ausgebildet ist, wobei das Holz dem Zufuhrbereich 3 über die Eintrittsöffnung 4 zuführbar und der Eintrittsquerschnitt 2 des Bündelaggregats 1 der Austrittsöffnung 5 nachgeschaltet ist.

Wie aus den Figuren 1 und 2 ersichtlich, ist dabei besonders bevorzugt vorgesehen, dass die Vorrichtung auf einem Fahrzeug 6 (typischerweise ein Waldfahrzeug mit entsprechender Geländegängigkeit) angeordnet ist. Um die vorerwähnte, kontinuierliche Ernte und Bündelung von Holz zu realisieren, ist der auf dem Fahrzeug 6 angeordneten Vorrichtung eine Sägeeinrichtung 7 (zum Beispiel eine knapp über dem Boden entlang geführte Kreissäge) vorgeschaltet, wobei zwischen der Vorrichtung und der Sägeeinrichtung 7 eine Fördereinrichtung 8 (hier eine Förderschnecke mit im wesentlichen vertikaler Hauptachse) angeordnet ist, um die abgeschnittenen Bäumchen mit ihren Stammfüßchen voran der Eintrittsöffnung 4 zuführen zu können.

Wie sich aus den Figuren 1 und 2 ergibt, weist der erfindungsgemäße Tunnel eine im wesentlichen horizontal verlaufende Hauptachse auf. Zur Anpassung an die Anordnung des Führerhäuschens 11 und des Bündelaggregats 1: hat die die Hauptachse des Tunnels dabei eine leichte, seitliche Krümmung.

Weiterhin ist bevorzugt vorgesehen, dass der Tunnel vier Seitenwände 9 umfasst. Diese Seitenwände 9 können dabei als glatte Bleche ausgebildet sein, die zu einem in sich geschlossenen Tunnel führen (abgesehen von Eintritts- 4 und Austrittsöffnung 5). Es können aber auch andere Seitenwandkonstruktionen vorgesehen sein, wesentlich ist, dass das Holz den Stauraum (Tunnel) nur über die Austrittsöffnung 5 verlassen kann (in Figur 1 ist zum besseren Verständnis des Stauchvorgangs die obere Abdeckung des Tunnels nicht dargestellt).

Ferner sind sowohl an der Eintrittsöffnung 4 als auch an der Austrittsöffnung 5 Förderwalzen 10 angeordnet. Diese dienen zum Transport des geschnittenen Holzes, wobei, wie eingangs erläutert, die Drehgeschwindigkeit der Förderwalzen 10 an der Eintrittsöffnung 4 größer als an der Austrittsöffnung 5 ist, um die Schnittgeschwindigkeit an die Bündelgeschwindigkeit des Bündelaggregats 1 anzupassen.

In diesem Zusammenhang ist schließlich noch vorgesehen, dass die Eintrittsöffnung 4 eine Querschnittsfläche von etwa 0,06 m² bis etwa 0,1 m² und die Austrittsöffnung 5 eine Querschnittsfläche von etwa 0,5 m² oder mehr aufweist.

### Bezugszeichenliste

- 1: Bündelaggregat
- 2: Eintrittsquerschnitt
- 3: Zufuhrbereich
- 4: Eintrittsöffnung
- 5: Austrittsöffnung
- 6: Fahrzeug
- 7: Sägeeinrichtung
- 8: Fördereinrichtung
- 9: Seitenwand
- 10: Förderwalze
- 11: Führerhäuschen

## Patentansprüche

1. Vorrichtung zum Bündeln von Holz, umfassend ein Bündelaggregat (1) mit einem Eintrittsquerschnitt (2), dem ein Zufuhrbereich (3) für das zu bündelnde Holz vorgeschaltet ist, wobei der Zufuhrbereich (3) als sich im Querschnitt erweiternder Tunnel mit einer Eintritts- (4) und einer Austrittsöffnung (5) ausgebildet ist, wobei das Holz dem Zufuhrbereich (3) über die Eintrittsöffnung (4) zuführbar und der Eintrittsquerschnitt (2) des Bündelaggregats (1) der Austrittsöffnung (5) nachgeschaltet ist,
**dadurch gekennzeichnet, dass**
der Zufuhrbereich (3) als sich im Querschnitt in Richtung Bündelaggregat (1) erweiternder Tunnel ausgebildet ist.

2. Vorrichtung nach Anspruch 1,
**dadurch gekennzeichnet,**
**dass** die Vorrichtung auf einem Fahrzeug (6) angeordnet ist.

3. Vorrichtung nach Anspruch 2,
**dadurch gekennzeichnet,**
**dass** der auf dem Fahrzeug (6) angeordneten Vorrichtung eine Sägeeinrichtung (7) vorgeschaltet ist.

4. Vorrichtung nach Anspruch 3,
**dadurch gekennzeichnet,**
**dass** zwischen der Vorrichtung und der Sägeeinrichtung (7) eine Fördereinrichtung (8) angeordnet ist.

5. Vorrichtung nach einem der Ansprüche 1 bis 4
**dadurch gekennzeichnet,**
**dass** der Tunnel eine im wesentlichen horizontal verlaufende Hauptachse aufweist.

6. Vorrichtung nach Anspruch 5,
**dadurch gekennzeichnet,**
**dass** die Hauptachse des Tunnels eine leichte, seitliche Krümmung aufweist.

7. Vorrichtung nach einem der Ansprüche 1 bis 6,
**dadurch gekennzeichnet,**
**dass** der Tunnel vier Seitenwände (9) umfasst.

8. Vorrichtung nach einem der Ansprüche 1 bis 7,
**dadurch gekennzeichnet,**
**dass** an der Eintrittsöffnung (4) Förderwalzen (10) angeordnet sind.

9. Vorrichtung nach einem der Ansprüche 1 bis 8,
**dadurch gekennzeichnet,**
**dass** die Eintrittsöffnung (4) eine Querschnittsfläche von 0,06 m² bis 0,1 m² aufweist.

10. Vorrichtung nach einem der Ansprüche 1 bis 9,
**dadurch gekennzeichnet,**
**dass** an der Austrittsöffnung (5) Förderwalze (10) angeordnet sind.

11. Vorrichtung nach einem der Ansprüche 1 bis 10,
**dadurch gekennzeichnet,**
**dass** die Austrittsöffnung (5) eine Querschnittsfläche von 0,5 m² oder mehr aufweist.

## Claims

1. A device for bundling wood, comprising a bundling assembly (1) having an entry cross-section (2), from which a feed area (3) for the wood to be bundled is connected upstream, the feed area (3) being implemented as a tunnel which widens in cross-section, having an entry opening (4) and an exit opening (5), the wood being able to be fed to the feed area (3) via the entry opening (4) and the entry cross-section (2) of the bundling assembly (1) being connected downstream from the exit opening (5),
**characterized in that**
the feed area (3) is implemented as a tunnel which widens in cross-section in the direction of the bundling assembly (1).

2. The device according to Claim 1,
**characterized in that**
the device is situated on a vehicle (6).

3. The device according to Claim 2,
**characterized in that**
a sawing apparatus (7) is connected upstream from the device situated on the vehicle (6).

4. The device according to Claim 3,
**characterized in that**
a conveyor apparatus (8) is situated between the device and the sawing apparatus (7).

5. The device according to one of Claims 1 to 4,
**characterized in that**
the tunnel has an essentially horizontally running main axis.

6. The device according to Claim 5,
**characterized in that**
the main axis of the tunnel has a slight lateral curve.

7. The device according to one of Claims 1 to 6,
**characterized in that**
the tunnel comprises four lateral walls (9).

8. The device according to one of Claims 1 to 7,
**characterized in that**
conveyor rollers (10) are situated on the entry opening (4).

9. The device according to one of Claims 1 to 8,
**characterized in that**
the entry opening (4) has a cross-sectional area of 0.06 m² to 0.1 m².

10. The device according to one of Claims 1 to 9,
**characterized in that**
conveyor rollers (10) are situated on the exit opening (5) .

11. The device according to one of Claims 1 to 10,
**characterized in that**
the exit opening (5) has a cross-sectional area of 0.5 m² or more.

## Revendications

1. Dispositif de bottelage de bois, comprenant un ensemble de bottelage (1) avec une section transversale d'entrée (2), en amont de laquelle est montée une zone d'alimentation (3) pour le bois à embotteler, la zone d'alimentation (3) étant conçue sous la forme d'un tunnel dont la section transversale s'élargit, avec une ouverture d'entrée (4) et une ouverture de sortie (5), le bois pouvant être alimenté vers la zone d'alimentation (3) via l'ouverture d'entrée (4) et la section transversale d'entrée (2) de l'ensemble de bottelage (1) étant montée en aval de l'ouverture de sortie (5)
**caractérisé en ce que**
la zone d'alimentation (3) est conçue sous la forme d'un tunnel s'élargissant en direction de l'ensemble de bottelage (1).

2. Dispositif selon la revendication 1,
**caractérisé en ce que**
le dispositif est disposé sur un véhicule (6).

3. Dispositif selon la revendication 2,
**caractérisé en ce qu'**un
système de sciage (7) est monté en amont du dispositif disposé sur le véhicule (6).

4. Dispositif selon la revendication 3,
**caractérisé en ce**
**qu'**entre le dispositif et le système de sciage (7) est disposé un système de transport (8).

5. Dispositif selon l'une quelconque des revendications 1 à 4,
**caractérisé en ce que**
le tunnel présente un axe principal s'étendant sensiblement à l'horizontale.

6. Dispositif selon la revendication 5,
**caractérisé en ce que**
l'axe principal du tunnel présente une légère courbure latérale.

7. Dispositif selon l'une quelconque des revendications 1 à 6,
**caractérisé en ce que**
le tunnel comprend quatre parois latérales (9).

8. Dispositif selon l'une quelconque des revendications 1 à 7,
**caractérisé en ce**
**que** des rouleaux de transport (10) sont disposés sur l'ouverture d'entrée (4).

9. Dispositif selon l'une quelconque des revendications 1 à 8,
caractérisen ce que
l'ouverture d'entrée (4) présente une surface de section transversale de 0,06 m² à 0,1 m².

10. Dispositif selon l'une quelconque des revendications 1 à 9,
**caractérisé en ce que**
des rouleaux de transport (10) sont disposés sur l'ouverture de sortie (5).

11. Dispositif selon l'une quelconque des revendications 1 à 10,
caractérisé é en ce que
l'ouverture de sortie (5) présente une surface de section transversale de 0,5 m² ou plus.
